# EUROPEAN PATENT SPECIFICATION

(11) **EP 3 560 654 B1**
(45) Date of publication and mention of the grant of the patent: **22.04.2026**
(21) Application number: 19165671.9
(22) Date of filing: 28.03.2019
(51) Int. Cl.: B27M 1/08, B23Q 1/01, B23Q 7/04

(54) **MACHINE FOR MACHINING WORKPIECES**
BEARBEITUNGSMASCHINE
MACHINE D'USINAGE

(30) Priority: 23.04.2018 IT 201800004772
(43) Date of publication of application: 30.10.2019
(73) Proprietor: SCM Group S.p.A., 47921 Rimini (RN) (IT)
(72) Inventor: BIANCHI, Fabio, 47921 RIMINI (IT); FILIPPI, Severino, 47921 RIMINI (IT)
(74) Representative: Mele, Emanuele

(56) References cited:
- EP-A1- 2 305 440
- EP-A2- 2 067 586
- DE-A1- 102014 219 060
- DE-A1- 102015 212 541
- DE-A1- 102015 218 814

## Description

This invention relates to a machine for machining workpieces according to the preamble of independent claim 1. Such a machine is known from the document EP 2 067 586 A2.

More in detail, the invention relates to a machine particularly suitable for machining oblong elements made of solid wood to be used, for example, for making windows or doors.

The description below relates to the machining of workpieces made of solid wood, but it is quite apparent how the same should not be considered limited to this specific use, as the machine according to the invention may also be advantageously applied in the machining of workpieces made of different materials.

Various types of machines are known for machining oblong elements made of wood, equipped with various operating units and gripping systems for firmly retaining the elements during the performance of the machining operations planned by the set work programme.

However, these prior art machines have a series of disadvantages and drawbacks mainly linked to the poor flexibility of use.

In light of the above, the aim of the invention is therefore to provide a multi-purpose machine for machining workpieces.

Another aim of the invention is to provide a machine for machining workpieces which has a high flexibility of use.

A further aim of the invention is to provide a machine for machining workpieces which is particularly efficient in use.

Another aim of the invention is to provide a machine for machining workpieces which has a reduced structural complexity.

The specific object of the invention is therefore is a machine for machining at least one workpiece where there are defined a first side and a second side which is opposite to said first side, said machine comprising: at least one first seizing unit comprising a first seizing system and a second seizing system which are oriented parallelly to a first axis and faced to each other relative to a second axis which is orthogonal to said first axis, said first seizing system comprising at least one first seizing assembly for seizing, in use, said at least one workpiece at said second side, said second seizing system comprising at least one second seizing assembly for seizing, in use, said at least one workpiece at said first side, wherein said at least one first seizing assembly is movable parallelly to said second axis relative to said at least one second seizing assembly or said at least one second seizing assembly is movable parallelly to said second axis relative to said at least one first seizing assembly such as to allow transferring said at least one workpiece from said at least one first seizing assembly to said at least one second seizing assembly or from said at least one second seizing assembly to said at least one first seizing assembly when said at least one first seizing assembly and said at least one second seizing assembly are adjacently faced to each other; a crosspiece which is placed above said first seizing unit, wherein said first seizing unit is movable according to said first axis relative to said crosspiece or said crosspiece is movable according to said first axis relative to said first seizing unit; and operative means for executing at least one machining operation on said at least one workpiece, said operative means being movably connected with said crosspiece such as to allow, in use, sequentially machining said first side and said second side of said at least one workpiece by relative motion between said first seizing unit and said crosspiece and by transferring said at least one workpiece from said at least one first seizing assembly to said at least one second seizing assembly or from said at least one second seizing assembly to said at least one first seizing assembly.

Preferably, according to the invention, said machine comprises a base and said crosspiece is fixed relative to said base and said first seizing unit is movable relative to said base according to said first axis.

According to the invention, said at least a first seizing assembly and said at least a second seizing assembly can each comprise at least a first vertically operating vice.

Further according to the invention, said at least a first seizing assembly and said at least a second seizing assembly can each comprise a lower support and in that said first vice can be movable parallelly to said first axis relative to the respective lower support.

Again according to the invention, said at least a first seizing assembly and said at least a second seizing assembly can each comprise a second vertically operating vice and a third vertically operating vice which are placed aligned with said first vice, parallelly to said first axis.

Conveniently according to the invention, said first seizing system can comprise a third seizing assembly and a fourth seizing assembly and said second seizing system can comprises a fifth seizing assembly, facing said third seizing assembly, and a sixth seizing assembly facing said fourth seizing assembly, wherein said third seizing assembly is movable relative to said fifth seizing assembly, or vice versa, parallelly to said second axis, and wherein said fourth seizing assembly is movable relative to said sixth seizing assembly, or vice versa, parallelly to said second axis.

Preferably according to the invention, said machine comprises a second seizing unit which is movable relative to said crosspiece along a predetermined axis which is parallel to said first axis.

Further according to this invention, said second seizing unit can be identical to said first seizing unit.

Advantageously according to the invention, said operative means an comprise at least one first operative head and at least one second operative head which is independently movable relative to said first operative head.

The invention is now described, by way of example and without limiting the scope of the invention, with reference to the accompanying drawings which illustrate preferred embodiments of it, in which:
Figure 1 is an axonometric view of a machine for machining workpieces according to the invention;
Figure 2 is a top plan view of the machine shown in Figure 1;
Figure 3 is a front view of the machine of Figures 1 and 2;

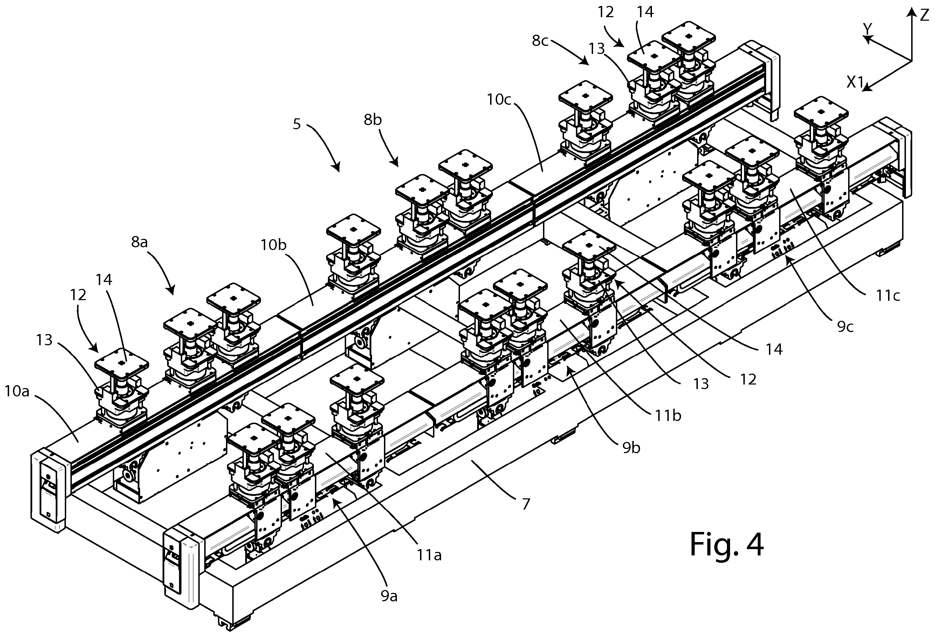

Figure 4 is an axonometric view of a part of the machine shown in Figures 1 to 3;

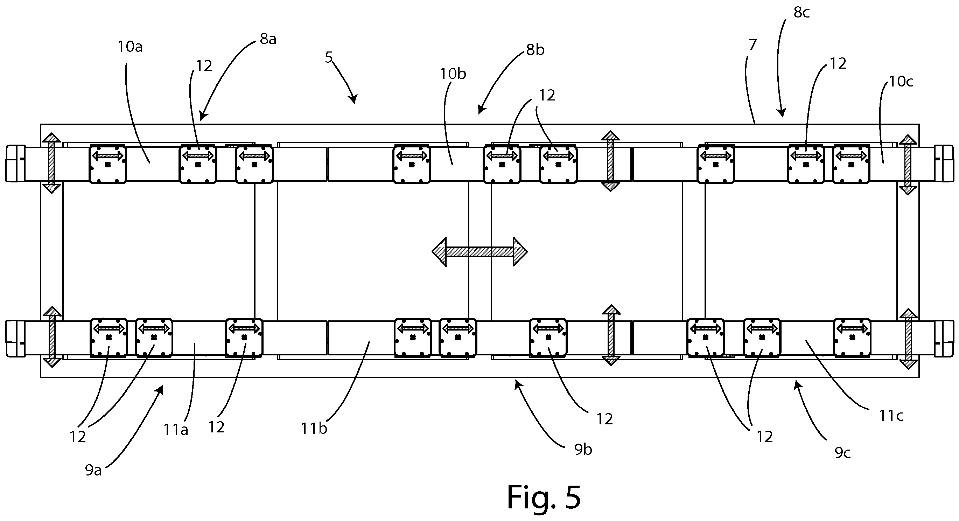

Figure 5 is a top plan view of the part of the machine shown in Figure 4;

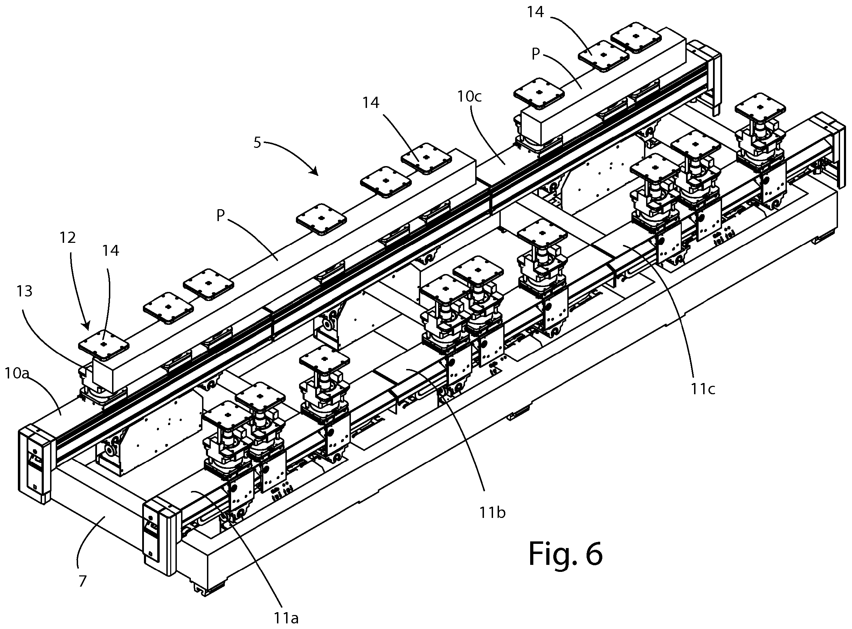

Figure 6 is an axonometric view of the part of the machine shown in Figures 4 and 5, during a first operating step; and
Figure 7 is a top plan view of the part of the machine shown in Figures 4 to 6, during a second operating step.

The similar parts will be indicated in the various drawings with the same numerical references.

With reference to the accompanying drawings, the numeral 1 denotes a machine for machining workpieces P made of solid wood with an oblong shape and a substantially square or rectangular cross section, designed for making, for example, frames for windows or doors.

The above-mentioned machine 1 comprises a base 2 in which there is a first track 3, which extends along a first axis X1, and a second track 4 positioned alongside the first track 3 and extending along a second axis X2 parallel to said first axis X1.

Along the first track 3 and the second track 4 are enables to move, respectively, a first seizing unit 5 along said first axis X1 and a second seizing unit 6, equal to the first seizing unit 5, along said second axis X2.

Each of said first siezing unit 5 and second seizing unit 6 comprises a lower frame 7 on which are mounted a first trio of seizing assemblies 8a, 8b, 8c e and a second trio of seixing assemblies 9a, 9b, 9c to allow the seizing of one or more workpieces P with an oblong shape positioned parallel to the first axis X1 and to the second axis X2, during the machining operations planned by the set work programme.

In particular, the seizing assemblies of the first trio of seizing assemblies 8a, 8b, 8c and the seizing assemblies of the second trio of seizing assemblies 9a, 9b, 9c are coplanar with each other and facing in pairs.

Moreover, each seizing assembly of the first trio of seizing assemblies 8a, 8b, 8c and of the second trio of seizing assemblies 9a, 9b, 9c is formed by a respective lower support 10a, 10b, 10c, 11a, 11b, 11c oriented parallel to the first axis X1 and to the second axis X2 and movable, independently, parallel to a third axis Y at right angles to the above-mentioned first axis X1 and second axis X2, and by three seizing members, that is to say, three vertically operating vices 12 equal to each other and each movable along the relative lower support 10a, 10b, 10c, 11a, 11b, 11c parallel to the first axis X1 and to the second axis X2.

More in detail, each operating vice 12 comprises a lower plate 13 and an upper plate 14 movable vertically, by means of respective actuator means, towards and away from each other.

Above the base 2, in a middle zone of the latter, there is a crosspiece 15 fixed with respect to the underlying base 2 and oriented according to the above-mentioned third axis Y.

On two opposite sides of the crosspiece 15 are mounted a first operating head 16 and a second operating head 17 each movable parallel to the axis Y and according to a fourth axis Z at right angles to said axes X1, X2, Y.

At the two ends of the crosspiece 15 which fall outside the base 2, there are also, respectively, a first housing unit 18 and a second housing unit 19, also called "tool holders", configured to allow the housing of a respective plurality of tools designed for use by means of the first operating head 16 and the second operating head 17.

For some types of applications it is necessary to machine a first side F₁ and a second side F₂, opposite said first side F₁, of the various workpieces P; this is necessary, for example, in the use of workpieces P for making windows or doors.

In these cases, the workpieces P to be machined are loaded on the first seizing unit 5 and/or on the second seizing unit 6 for example by means of a mechanical robot with an articulated arm (not shown in the drawings) and gripped by one or more seizing units according to the length of the workpieces P, in such a way that the first side F₁ faces towards the same seizing units which hold the workpieces P and the second side F₂ faces, on the other hand, towards the seizing units of the opposite trio so as to be completely exposed and therefore suitable for being machined by the first operating head 16 or by the second operating head 17.

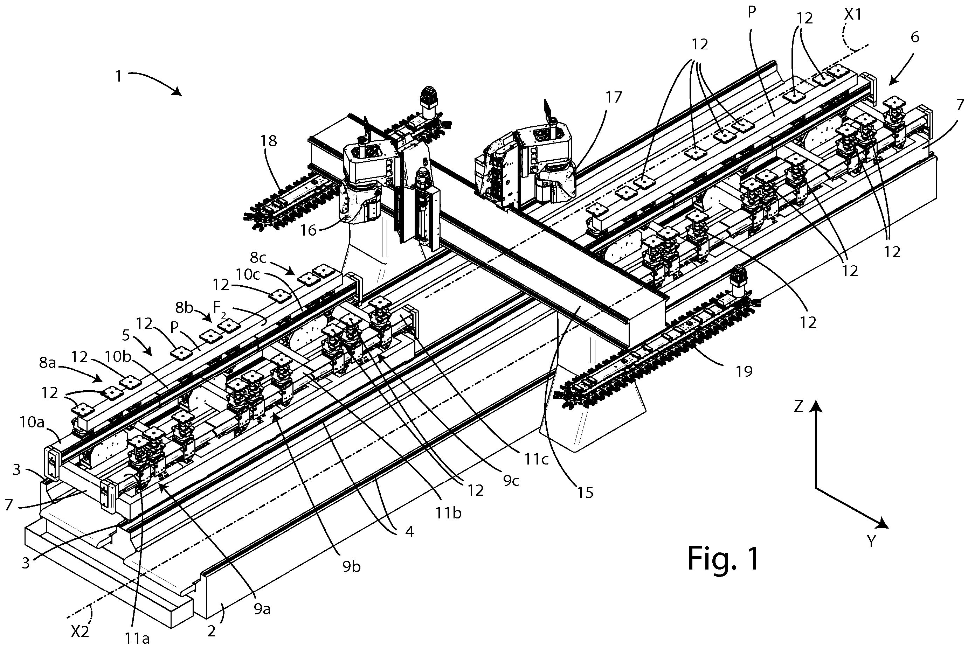

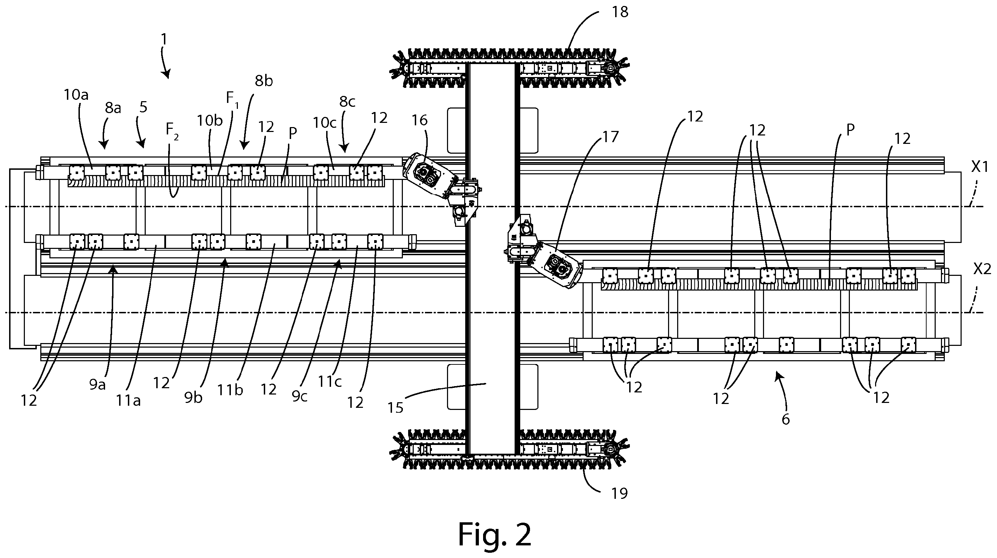

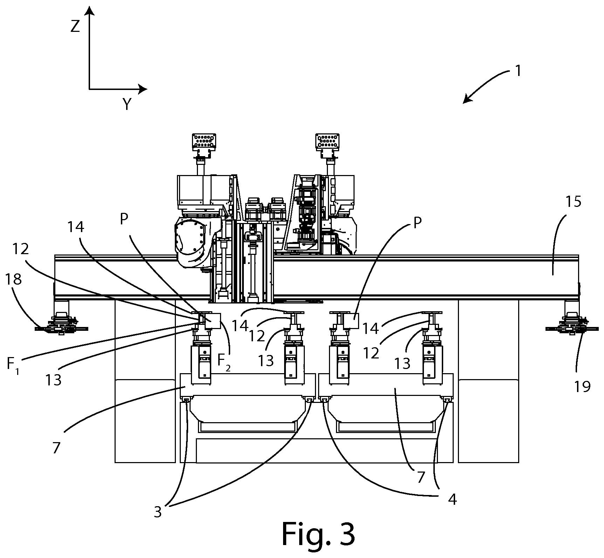

In particular, considering, for example, the workpiece P loaded on the first seizing unit 5 (see Figures 1 to 3), the machining of the second side F₂ of the workpiece P is performed by positioning, preliminarily, the first operating head 16 aligned with respect to the second side F₂ and moving, subsequently, the entire first seizing unit 5 along the first axis X1 towards the first operating head 16.

In this way, the tool mounted on the first operating head 16 comes into contact with all or at least a part of the second side F₂, carrying out the machining planned by the work program for that side.

Once the planned machining has been performed on the second side F₂, the seizing units of the first trio of seizing units which hold the workpiece P move towards the opposite seizing units of the second trio of seizing units until they are alongside them, or vice versa.

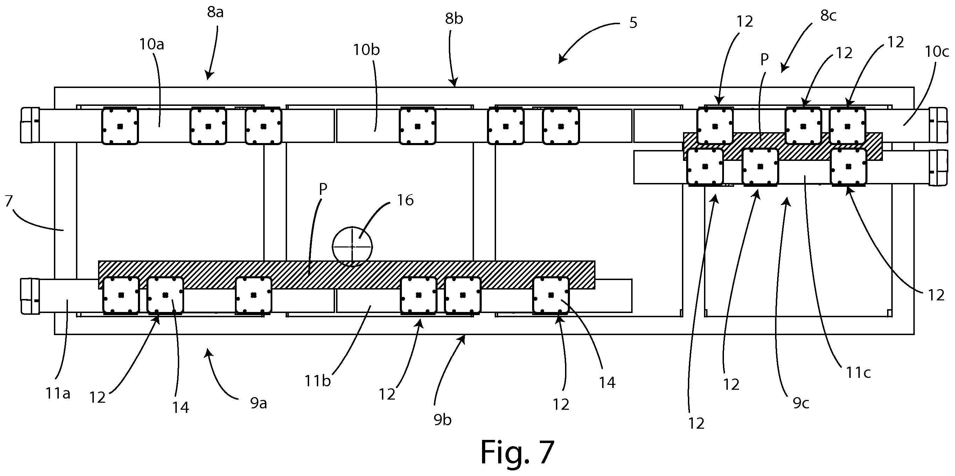

The workpiece P is therefore also gripped by the seizing members opposite those which are holding the workpiece P, which can, at this point, release the grip (see Figure 7).

In this way, the second side F₂, already machined, of the workpiece P is positioned in front of the seizing units which retain it, whilst the first side F₁ is now exposed and therefore ready to be also machined by the first operating head 16 in the same way as described above, that is, moving the entire first seizing unit 5 along the first axis X1 in the opposite direction to the previous movement which made possible the machining of the second side F₂.

The presence, in each seizing unit 5, 6, of two trios of seizing systems 8a, 8b, 8c, 9a, 9b, 9c which are completely independent in their movements according to the above-mentioned third axis Y and the provision of three vices 12 movable parallel to the first axis X1 and to the second axis X2 in each gripping system renders the above-mentioned machine 1 particularly efficient and flexible in use, allowing one or more workpieces P of different length to be moved and machined in sequence, thereby reducing the machining times.

According to a simplified version of the invention, the above-mentioned machine can comprise a single movable seizing unit on a single track and a single operating head.

According to a further variant of the invention, the first seizing unit 5 and the second seizing unit 6 are fixed with respect to the base 2, whilst the crosspiece 15 is movable according to the first axis X1 and the second axis X2.

In the latter case, it will therefore be the crosspiece 15 to move with respect to the first seizing unit 5 and to the second seizing unit 6 to allow the performance of the machining operations panned on the workpiece P.

## Claims

1. Machine (1) for machining at least one workpiece where there are defined a first side (F₁) and a second side (F₂) which is opposite to said first side (F₁), said machine (1) comprising:
at least one first seizing unit (5) comprising a first seizing system (8a, 8b, 8c) and a second seizing system (9a, 9b, 9c) which are oriented parallelly to a first axis (X1) and faced to each other relative to a second axis (Y) which is orthogonal to said first axis (X1), said first seizing system (8a, 8b, 8c) comprising at least one first seizing assembly (8a) for seizing, in use, said at least one workpiece (P) at said second side (F₂), said second seizing system (9a, 9b, 9c) comprising at least one second seizing assembly (9a) for seizing, in use, said at least one workpiece (P) at said first side (F₁), wherein said at least one first seizing assembly (8a) and said at least one second seizing assembly (9a) each comprise at least one first vertically operating vice (12), at least one second vertically operating vice (12) and a lower support (10a, 11a), wherein said first vice (12) and said second vice (12) are movable parallelly to said first axis (X1) relative to the respective lower support (10a, 11a), wherein said at least one first seizing assembly (8a) is movable parallelly to said second axis (Y) relative to said at least one second seizing assembly (9a) or said at least one second seizing assembly (9a) is movable parallelly to said second axis (Y) relative to said at least one first seizing assembly (8a) such as to allow transferring said at least one workpiece (P) from said at least one first seizing assembly (8a) to said at least one second seizing assembly (9a) or from said at least one second seizing assembly (9a) to said at least one first seizing assembly (8a) when said at least one first seizing assembly (8a) and said at least one second seizing assembly (9a) are adjacently faced to each other;
a crosspiece (15) which is placed above said first seizing unit (5), wherein said first seizing unit (5) is movable according to said first axis (X1) relative to said crosspiece (15); and
operative means (16, 17) for executing at least one machining operation on said at least one workpiece (P), said operative means (16, 17) being movably connected with said crosspiece (15) such as to allow, in use, sequentially machining said first side (F₁) and said second side (F₂) of said at least one workpiece (P) by relative motion between said first seizing unit (5) and said crosspiece (15) and by transferring said at least one workpiece (P) from said at least one first seizing assembly (8a) to said at least one second seizing assembly (9a) or from said at least one second seizing assembly (9a) to said at least one first seizing assembly (8a).

2. Machine (1) according to claim 1, **characterized in that** it comprises a base (2) and **in that** said crosspiece (15) is fixed relative to said base (2) and said first seizing unit (5) is movable relative to said base (2) according to said first axis (X1).

3. Machine (1) according to claim 1 or 2, **characterized in that** said at least one first seizing assembly (8a) and said at least one second seizing assembly (9a) each comprise a second vertically operating vice (12) and a third vertically operating vice (12) which are placed aligned with said first vice (12) parallelly to said first axis (X1).

4. Machine (1) according to any one of preceding claims, **characterized in that** said first seizing system (8a, 8b, 8c) comprises a third seizing assembly (8b) and a fourth seizing assembly (8c) and **in that** said second seizing system (9a, 9b, 9c) comprises a fifth seizing assembly (9b) facing said third seizing assembly (8b), and a sixth seizing assembly (9c) facing said fourth seizing assembly (8c), wherein said third seizing assembly (8b) is movable relative to said fifth seizing assembly (9b), or vice versa, parallelly to said second axis (Y), and wherein said fourth seizing assembly (8c) is movable relative to said sixth seizing assembly (9c), or vice versa, parallelly to said second axis (Y).

5. Machine (1) according to any one of preceding claims, **characterized in that** it comprises a second seizing unit (6) which is movable relative to said crosspiece (15) along a predetermined axis (X2) which is parallel to said first axis (X1).

6. Machine (1) according to claim 5, **characterized in that** said second seizing unit (6) is identical to said first seizing unit (5).

7. Machine (1) according to any one of preceding claims, **characterized in that** said operative means comprise at least one first operative head (16) and at least one second operative head (17) which is independently movable relative to said first operative head (16).

## Patentansprüche

1. Bearbeitungsmaschine (1) mindestens eines Werkstücks, auf dem eine erste Seite (F₁) und eine zweite Seite (F₂) definiert sind, die der ersten Seite (F₁) gegenüberliegt, wobei die Maschine (1) umfasst:
mindestens eine erste Greifeinheit (5), die ein erstes Greifsystem (8a, 8b, 8c) und ein zweites Greifsystem (9a, 9b, 9c) umfasst, die parallel zu einer ersten Achse (X1) ausgerichtet sind und in Bezug auf eine zweite Achse (Y), die orthogonal zu der ersten Achse (X1) ist, einander gegenüberliegen, wobei das erste Greifsystem (8a, 8b, 8c) mindestens eine erste Greifanordnung (8a) umfasst, um im Gebrauch das mindestens eine Werkstück (P) an der zweiten Seite (F₂) zu ergreifen, wobei das zweite Greifsystem (9a, 9b, 9c) mindestens eine zweite Greifbaugruppe (9a) umfasst, um im Gebrauch das mindestens eine Werkstück (P) an der ersten Seite (F₁) zu greifen, wobei die mindestens eine erste Greifbaugruppe (8a) und die mindestens eine zweite Greifbaugruppe (9a) jeweils mindestens einen ersten vertikal arbeitenden Schraubstock (12), mindestens einen zweiten vertikal arbeitenden Schraubstock (12) und einen unteren Träger (10a, 11a) umfassen, wobei der erste Schraubstock (12) und der zweite Schraubstock (12) parallel zu der ersten Achse (X1) relativ zu der jeweiligen unteren Halterung (10a, 11a) bewegbar sind, wobei die mindestens eine erste Greifbaugruppe (8a) parallel zu der zweiten Achse (Y) relativ zu der mindestens einen zweiten Greifbaugruppe (9a) bewegbar ist oder die mindestens eine zweite Greifbaugruppe (9a) parallel zu der zweiten Achse (Y) relativ zu der mindestens einen ersten Greifbaugruppe (8a) bewegbar ist, so dass die Übertragung des mindestens einen Werkstücks (P) ermöglicht wird von der mindestens einen ersten Erfassungsbaugruppe (8a) zu der mindestens einen zweiten Erfassungsbaugruppe (9a) oder von der mindestens einen zweiten Erfassungsbaugruppe (9a) zu der mindestens einen ersten Erfassungsbaugruppe (8a), wenn die mindestens eine erste Erfassungsbaugruppe (8a) und die mindestens eine zweite Erfassungsbaugruppe (9a) einander benachbart zugewandt sind;
ein Querstück (15), das oberhalb der ersten Greifeinheit (5) angeordnet ist, wobei die erste Greifeinheit (5) gemäß der ersten Achse (X1) relativ zu dem Querstück (15) beweglich ist; und
Betätigungsmittel (16, 17) zur Durchführung mindestens eines Bearbeitungsvorgangs an dem Werkstück (P), wobei die Betätigungsmittel (16, 17) beweglich mit dem Querstück (15) verbunden sind, sodass im Gebrauch die erste Seite (F₁) und die zweite Seite (F₂) des Werkstücks (P) nacheinander durch Relativbewegung zwischen der ersten Spannvorrichtung (5) und dem Querstück (15) bearbeitet werden können und das Werkstück (P) von der ersten Spannvorrichtung (8a) zur zweiten Spannvorrichtung (9a) oder von der zweiten Spannvorrichtung (9a) zur ersten Spannvorrichtung (8a) überführt wird

2. Maschine (1) nach Anspruch 1, **dadurch gekennzeichnet, dass** sie eine Basis (2) umfasst und dass der Querträger (15) in Bezug auf die Basis (2) befestigt ist und die erste Greifeinheit (5) in Bezug auf die Basis (2) gemäß der ersten Achse (X1) beweglich ist.

3. Maschine (1) nach Anspruch 1 oder 2, **dadurch gekennzeichnet, dass** die mindestens eine erste Greifeinheit (8a) und die mindestens eine zweite Greifeinheit (9a) jeweils einen zweiten vertikal arbeitenden Schraubstock (12) und einen dritten vertikal arbeitenden Schraubstock (12) umfassen, die mit dem ersten Schraubstock (12) parallel zu der ersten Achse (X1) ausgerichtet sind.

4. Maschine (1) nach einem der vorhergehenden Ansprüche, **dadurch gekennzeichnet, daß** das erste Greifsystem (8a, 8b, 8c) eine dritte Greifanordnung (8b) und eine vierte Greifanordnung (8c) umfaßt und daß das zweite Greifsystem (9a, 9b, 9c) eine fünfte Greifanordnung (9b), die der dritten Greifanordnung (8b) gegenüberliegt, und eine sechste Greifanordnung (9c), die der vierten Greifanordnung (8c) gegenüberliegt, umfaßt, wobei die dritte Greifbaugruppe (8b) relativ zu der fünften Greifbaugruppe (9b) oder umgekehrt parallel zu der zweiten Achse (Y) beweglich ist, und wobei die vierte Greifbaugruppe (8c) relativ zu der sechsten Greifbaugruppe (9c) oder umgekehrt parallel zu der zweiten Achse (Y) beweglich ist.

5. Maschine (1) nach einem der vorhergehenden Ansprüche, **dadurch gekennzeichnet, dass** sie eine zweite Greifeinheit (6) umfasst, die relativ zu dem Querstück (15) entlang einer vorbestimmten Achse (X2) beweglich ist, die parallel zu der ersten Achse (X1) ist.

6. Maschine (1) nach Anspruch 5, **dadurch gekennzeichnet, dass** die zweite Greifeinheit (6) mit der ersten Greifeinheit (5) identisch ist.

7. Maschine (1) nach einem der vorhergehenden Ansprüche, **dadurch gekennzeichnet, dass** die Arbeitsmittel mindestens einen ersten Arbeitskopf (16) und mindestens einen zweiten Arbeitskopf (17) umfassen, der unabhängig von dem ersten Arbeitskopf (16) beweglich ist.

## Revendications

1. Machine (1) d'usinage d'au moins une pièce où sont définis un premier côté (F₁) et un deuxième côté (F₂) qui est opposé audit premier côté (F₁), ladite machine (1) comprenant:
au moins une première unité de saisie (5) comprenant un premier système de saisie (8a, 8b, 8c) et un deuxième système de saisie (9a, 9b, 9c) qui sont orientés parallèlement à un premier axe (X1) et confrontés l'un à l'autre par rapport à un deuxième axe (Y) qui est orthogonal audit premier axe (X1), ledit premier système de saisie (8a, 8b, 8c) comprenant au moins un premier ensemble de saisie (8a) pour saisir, en cours d'utilisation, ladite au moins une pièce (P) au niveau dudit deuxième côté (F₂), ledit deuxième système de saisie (9a, 9b, 9c) comprend au moins un deuxième ensemble de saisie (9a) pour saisir, en utilisation, ladite au moins une pièce (P) au niveau dudit premier côté (F₁), dans lequel ledit au moins un premier ensemble de saisie (8a) et ledit au moins un deuxième ensemble de saisie (9a) comprennent chacun au moins un premier étau (12) fonctionnant verticalement, au moins un deuxième étau (12) fonctionnant verticalement et un support inférieur (10a, 11a), dans lequel ledit premier étau (12) et ledit second étau (12) sont mobiles parallèlement audit premier axe (X1) par rapport au support inférieur respectif (10a, 11a), dans lequel ledit au moins un premier ensemble de saisie (8a) est mobile parallèlement audit deuxième axe (Y) par rapport audit au moins un deuxième ensemble de saisie (9a) ou ledit au moins un deuxième ensemble de saisie (9a) est mobile parallèlement audit deuxième axe (Y) par rapport audit au moins un premier ensemble de saisie (8a) de manière à permettre le transfert de ladite au moins une pièce à usiner (P) de cet au moins un premier assemblage de grippage (8a) à cet au moins un deuxième assemblage de grippage (9a) ou de cet au moins un deuxième assemblage de grippage (9a) à cet au moins un premier assemblage de grippage (8a) lorsque cet au moins un premier assemblage de grippage (8a) et cet au moins un deuxième assemblage de grippage (9a) sont adjacents l'un à l'autre;
un croisillon (15) placé au-dessus de la première unité de saisie (5), dans lequel la première unité de saisie (5) est mobile selon le premier axe (X1) par rapport au croisillon (15); et
des moyens opérationnels (16, 17) pour exécuter au moins une opération d'usinage sur ladite au moins une pièce (P), lesdits moyens opérationnels (16, 17) étant reliés de manière mobile à ladite traverse (15) de manière à permettre, en utilisation, l'usinage séquentiel dudit premier côté (F₁) et dudit deuxième côté (F₂) de ladite au moins une pièce (P) par mouvement relatif entre ladite première unité de préhension (5) et ladite traverse (15) et par transfert de ladite au moins une pièce (P) de ledit au moins un premier ensemble de préhension (8a) audit au moins un deuxième ensemble de préhension (9a) ou de ledit au moins un deuxième ensemble de préhension (9a) audit au moins un premier ensemble de préhension (8a).

2. Machine (1) selon la revendication 1, **caractérisée en ce qu'**elle comprend une base (2) et **en ce que** ladite traverse (15) est fixe par rapport à ladite base (2) et ladite première unité de saisie (5) est mobile par rapport à ladite base (2) selon ledit premier axe (X1).

3. Machine (1) selon la revendication 1 ou 2, **caractérisée en ce que** ledit au moins un premier ensemble de saisie (8a) et ledit au moins un deuxième ensemble de saisie (9a) comprennent chacun un deuxième étau (12) fonctionnant verticalement et un troisième étau (12) fonctionnant verticalement qui sont placés alignés avec ledit premier étau (12) parallèlement audit premier axe (X1).

4. Machine (1) selon l'une quelconque des revendications précédentes, **caractérisée en ce que** ledit premier système de grippage (8a, 8b, 8c) comprend un troisième ensemble de grippage (8b) et un quatrième ensemble de grippage (8c) et **en ce que** ledit deuxième système de grippage (9a, 9b, 9c) comprend un cinquième ensemble de grippage (9b) en face dudit troisième ensemble de grippage (8b), et un sixième ensemble de grippage (9c) en face dudit quatrième ensemble de grippage (8c), dans lequel ledit troisième ensemble de grippage (8b) est mobile par rapport audit cinquième ensemble de grippage (9b), ou vice versa, parallèlement audit deuxième axe (Y), et dans lequel ledit quatrième ensemble de grippage (8c) est mobile par rapport audit sixième ensemble de grippage (9c), ou vice versa, parallèlement audit deuxième axe (Y).

5. Machine (1) selon l'une quelconque des revendications précédentes, **caractérisée en ce qu'**elle comprend une deuxième unité de saisie (6) qui est mobile par rapport à ladite traverse (15) le long d'un axe prédéterminé (X2) qui est parallèle audit premier axe (X1).

6. Machine (1) selon la revendication 5, **caractérisée par le fait que** la deuxième unité de saisie (6) est identique à la première unité de saisie (5).

7. Machine (1) selon l'une quelconque des revendications précédentes, **caractérisée en ce que** lesdits moyens de fonctionnement comprennent au moins une première tête de fonctionnement (16) et au moins une deuxième tête de fonctionnement (17) qui est indépendamment mobile par rapport à ladite première tête de fonctionnement (16).
